# EUROPEAN PATENT APPLICATION

(11) **EP 4 535 146 A1**
(43) Date of publication of application: **09.04.2025**
(21) Application number: 23815055.1
(22) Date of filing: 24.05.2023
(51) Int. Cl.: G06F 3/04817, G06F 3/04842, G06F 3/0488, G06F 9/451

(54) **DISPLAY CONTROL METHOD AND APPARATUS, AND ELECTRONIC DEVICE AND READABLE STORAGE MEDIUM**

(30) Priority: 30.05.2022 CN 202210602272
(71) Applicant: VIVO MOBILE COMMUNICATION CO., LTD., Dongguan, Guangdong 523863 (CN)
(72) Inventor: YAN, Qi, Dongguan, Guangdong 523863 (CN)
(74) Representative: Lavoix
(86) International application number: PCT/CN2023/096094
(87) International publication number: WO 2023/231871

(57) **Abstract**

This application discloses a display control method and apparatus, an electronic device, and a readable storage medium, and pertains to the field of electronic technologies. The method includes: in a case that a first interface is displayed, receiving a first input by a user, where the first interface includes a first control; canceling, in response to the first input, display of the first control and establishing an association between the first control and a first display region in the first interface; and performing a first operation corresponding to the first control in response to a second input by the user to the first display region.

## Description

### CROSS-REFERENCE TO RELATED APPLICATIONS

This application claims priority to Chinese Patent Application No. 202210602272.3, filed with the China National Intellectual Property Administration on May 30, 2022 and entitled "DISPLAY CONTROL METHOD AND APPARATUS, ELECTRONIC DEVICE, AND READABLE STORAGE MEDIUM", which is incorporated herein by reference in its entirety.

### TECHNICAL FIELD

This application pertains to the field of electronic technologies and specifically relates to a display control method and apparatus, an electronic device, and a readable storage medium.

### BACKGROUND

Currently, when users use electronic devices to view videos, pictures, documents, and other files, the interface displays not only the file content but also some function icons. For example, a movie and TV series play interface displays a "screen projection" function icon; for another example, a short video play interface displays a "like" function icon.

In the related art, to reduce the display of function icons as much as possible to prevent the displayed icons from blocking the file content and prevent users from accidentally touching the icons, a simplified display mode can be enabled by a user when some files are displayed. This mode reduces the display of some function icons, such as retaining a volume adjustment function icon and a screen brightness adjustment function icon. When users need to conduct operations on the hidden function icons, they need to switch to the normal display mode.

It can be seen that in the prior art, reducing the display of function icons leads to more cumbersome operations for users when using some functions.

### SUMMARY

Embodiments of this application are intended to provide a display control method, so as to solve the problem of cumbersome operations for users when using some functions due to reduced display of function icons in related art.

According to a first aspect, an embodiment of this application provides a display control method. The method includes: in a case that a first interface is displayed, receiving a first input by a user, where the first interface includes a first control; canceling, in response to the first input, display of the first control and establishing an association between the first control and a first display region in the first interface; and performing a first operation corresponding to the first control in response to a second input by the user to the first display region.

According to a second aspect, an embodiment of this application provides a display control apparatus. The apparatus includes: a first receiving module configured to: in a case that a first interface is displayed, receive a first input by a user, where the first interface includes a first control; an establishing module configured to cancel, in response to the first input, display of the first control and establish an association between the first control and a first display region in the first interface; and a first execution module configured to perform a first operation corresponding to the first control in response to a second input by the user to the first display region.

According to a third aspect, an embodiment of this application provides an electronic device, where the electronic device includes a processor and a memory, the memory stores a program or instruction capable of running on the processor, and when the program or instruction is executed by the processor, the steps of the method according to the first aspect are implemented.

According to a fourth aspect, an embodiment of this application provides a readable storage medium, where a program or instruction is stored in the readable storage medium, and when the program or the instruction is executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instruction to implement the method according to the first aspect.

According to a sixth aspect, an embodiment of this application provides a computer program product, where the program product is stored in a storage medium, and the program product is executed by at least one processor to implement the method according to the first aspect.

According to a seventh aspect, an embodiment of this application provides an electronic device, where the electronic device is configured to execute the method according to the first aspect.

In the embodiments of this application, in the case that the first interface is displayed, the user can establish an association between the first display region in the first interface and the first control in the first interface by the first input, so as to cancel the display of the first control in the first interface on the basis of establishing the association between the first display region and the first control. Furthermore, the user can provide the second input to the first display region, so that the first operation corresponding to the first control can be executed in response to the second input. It can be seen that based on the embodiments of this application, for the controls in the interface, the user can hide some of the controls in a customized manner to experience a simplified display mode. When the user wants to use the functions corresponding to these hidden controls, they can directly perform quick operations in the corresponding display regions in the first interface to implement the functions corresponding to the controls, thereby simplifying user operations.

### BRIEF DESCRIPTION OF DRAWINGS

FIG. 1 is a flowchart of a display control method according to an embodiment of this application;
FIG. 2 is a first schematic diagram of an interface of an electronic device according to an embodiment of this application;
FIG. 3 is a second schematic diagram of an interface of an electronic device according to an embodiment of this application;
FIG. 4 is a third schematic diagram of an interface of an electronic device according to an embodiment of this application;
FIG. 5 is a fourth schematic diagram of an interface of an electronic device according to an embodiment of this application;
FIG. 6 is a fifth schematic diagram of an interface of an electronic device according to an embodiment of this application;
FIG. 7 is a sixth schematic diagram of an interface of an electronic device according to an embodiment of this application;
FIG. 8 is a seventh schematic diagram of an interface of an electronic device according to an embodiment of this application;
FIG. 9 is an eighth schematic diagram of an interface of an electronic device according to an embodiment of this application;
FIG. 10 is a first schematic diagram of a coordinate plane in a display control method according to an embodiment of this application;
FIG. 11 is a second schematic diagram of a coordinate plane in a display control method according to an embodiment of this application;
FIG. 12 is a ninth schematic diagram of an interface of an electronic device according to an embodiment of this application;
FIG. 13 is a tenth schematic diagram of an interface of an electronic device according to an embodiment of this application;
FIG. 14 is an eleventh schematic diagram of an interface of an electronic device according to an embodiment of this application;
FIG. 15 is a twelfth schematic diagram of an interface of an electronic device according to an embodiment of this application;
FIG. 16 is a thirteenth schematic diagram of an interface of an electronic device according to an embodiment of this application;
FIG. 17 is a fourteenth schematic diagram of an interface of an electronic device according to an embodiment of this application;
FIG. 18 is a fifteenth schematic diagram of an interface of an electronic device according to an embodiment of this application;
FIG. 19 is a sixteenth schematic diagram of an interface of an electronic device according to an embodiment of this application;
FIG. 20 is a seventeenth schematic diagram of an interface of an electronic device according to an embodiment of this application;
FIG. 21 is a block diagram of a display control apparatus according to an embodiment of this application;
FIG. 22 is a first schematic diagram of a hardware structure of an electronic device according to an embodiment of this application; and
FIG. 23 is a second schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, in this specification and claims, "and/or" indicates at least one of the connected objects, and the character "/" generally indicates an "or" relationship between the contextually associated objects.

The display control method provided in the embodiments of this application may be executed by the display control apparatus provided in the embodiments of this application or an electronic device integrated with the display control apparatus, where the display control apparatus may be implemented in hardware or software.

The following describes in detail the display control method provided in the embodiments of this application through specific embodiments and application scenarios thereof with reference to the accompanying drawings.

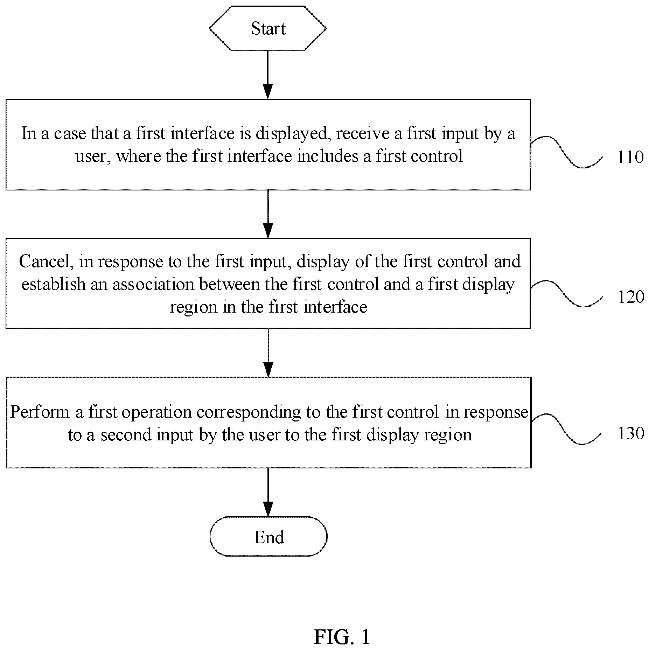

FIG. 1 is a flowchart of a display control method according to an embodiment of this application. The method being applied to an electronic device is used as an example, and the method includes the following steps.

Step 110. In a case that a first interface is displayed, receive a first input by a user, where the first interface includes a first control.

Step 120. Cancel, in response to the first input, display of the first control and establish an association between the first control and a first display region in the first interface.

The first input includes touch input by the user on a screen, not limited to input such as clicking, sliding, and dragging. The first input may also be non-touch input by the user, such as gesture actions and facial actions. The first input also includes input by the user on physical keys on the device, not limited to input such as pressing. In addition, the first input includes one or more inputs, where multiple inputs may be continuous or have time intervals.

In this step, the first input is used for establishing the association between the first display region and the first control in the first interface and hiding the first control in the first interface.

The first display region is used as a functional region for implementing a function corresponding to the first control.

Optionally, the first control is displayed as an icon, option, or the like.

Optionally, the first interface is used to display pages such as video play pages, web pages, document display pages, and picture display pages.

Optionally, the first input may include multiple sub-inputs depending on different implementations.

For example, the first input includes a sub-input for activating an interface region of the first interface.

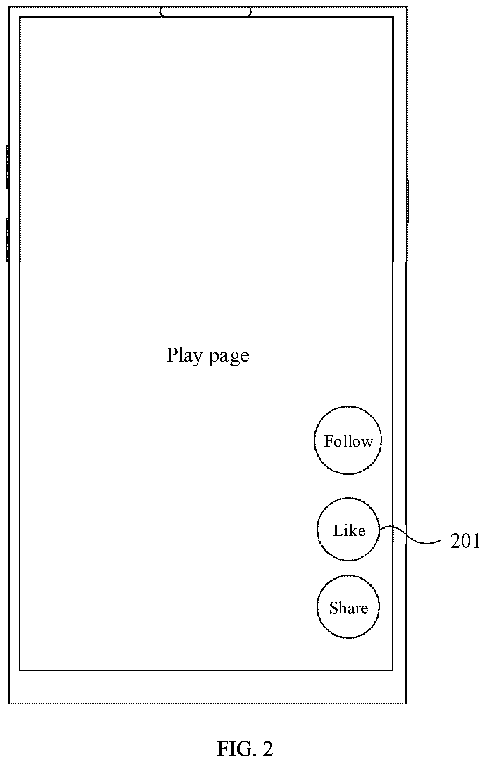

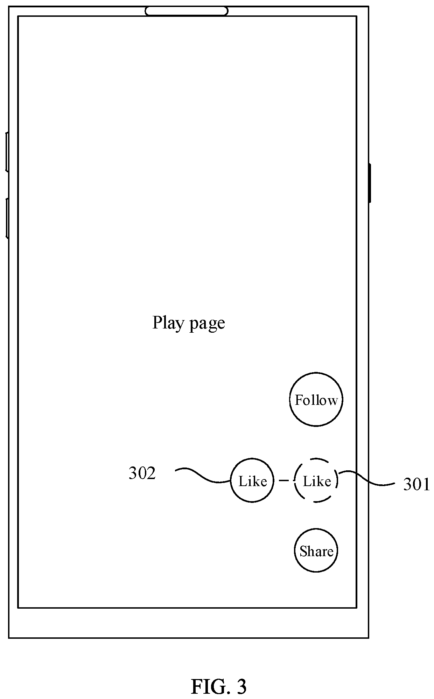

For example, referring to FIG. 2, the first interface is used to display a play page, where the play page is used to play short videos. In the first interface, a first control 201 (the first control being a "like" control is used as an example) is displayed. The user long presses the first control 201, and the state of the first control 201 changes, for example, from a stationary state to a jiggling state. With the jiggling state, the user can drag the first control 201 to make the first control 201 deviate its display position from the original position, referring to FIG. 3, for example, dragging from position 301 to position 302, where position 301 is the original position. Further, based on this, the interface region of the first interface is activated, and the user can select the first display region in the activated state to establish the association between the first display region and the first control.

For example, the first input further includes a sub-input for selecting the first display region.

For example, the interface region of the first interface is activated, and the first interface includes multiple display regions. The user can select one of the display regions as the first display region.

For another example, the interface region of the first interface is activated, and the user can mark a range in the first interface as the first display region.

For example, the first input further includes a sub-input for determining the first display region.

For example, based on the first display region selected by the user, a pop-up window including an "OK" option is displayed, and the user clicks the "OK" option.

In this way, based on the multiple sub-inputs of the first input, the association between the first display region and the first control is established.

Optionally, if the first interface displays dynamic content, when the user is providing the first input, the play progress of the first interface can be paused.

Step 130. Perform a first operation corresponding to the first control in response to a second input by the user to the first display region.

The second input includes touch input by the user on a screen, not limited to input such as clicking, sliding, and dragging. The second input may also be non-touch input by the user, such as gesture actions and facial actions. The second input also includes input by the user on physical keys on the device, not limited to input such as pressing. In addition, the second input includes one or more inputs, where multiple inputs may be continuous or have time intervals.

In this step, the second input is used for, in a case that the first control is hidden, performing the first operation corresponding to the first control by performing an operation on the first display region, so as to implement the function corresponding to the first control.

For example, the first control is a "like" control in a short video play page. Based on this application, the display of the first control is canceled in the short video play page. While watching short videos, the user can long press the first display region in the short video play page to like a currently playing short video in the short video play page.

Optionally, performing the first operation corresponding to the first control can achieve effects including but not limited to: updating the content in the first interface and switching from the first interface to another interface.

In this embodiment of this application, in the case that the first interface is displayed, the user can establish an association between the first display region in the first interface and the first control in the first interface by the first input, so as to cancel the display of the first control in the first interface on the basis of establishing the association between the first display region and the first control. Furthermore, the user can provide the second input to the first display region, so that the first operation corresponding to the first control can be executed in response to the second input. It can be seen that based on this embodiment of this application, for the controls in the interface, the user can hide some of the controls in a customized manner to experience a simplified display mode. When the user wants to use the functions corresponding to these hidden controls, they can directly perform quick operations in the corresponding display regions in the first interface to implement the functions corresponding to the controls, thereby simplifying user operations.

In the procedure of the display control method according to another embodiment of this application, the first input includes a first sub-input and a second sub-input; and correspondingly, step 110 includes the following step.

Sub-step A1. Receive the first sub-input by the user to the first control.

In this step, the first sub-input is used for displaying a second interface corresponding to the first interface, where the second interface is used for the user to select a second display region.

Correspondingly, step 120 includes the following steps.

Sub-step A2. Display the second interface corresponding to the first interface in response to the first sub-input.

Optionally, the second interface and the first interface are different interfaces, and the first interface is switched to the second interface in response to the first sub-input.

Optionally, the first interface and the second interface completely overlap.

Optionally, an overlapping part exists between the first interface and the second interface, and the overlapping part is used for the user to select the second display region.

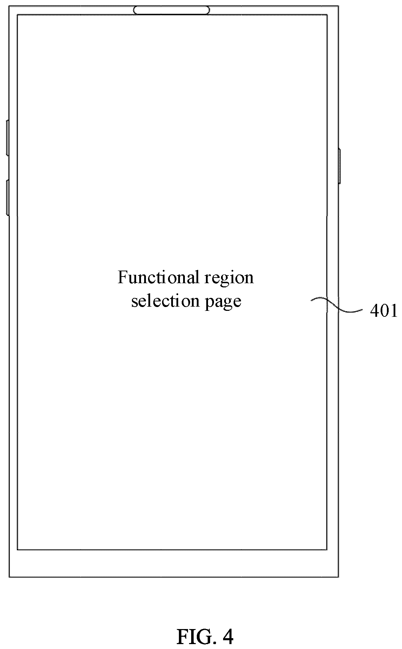

For example, referring to FIG. 4, the first interface is used to display a play page, and the second interface is used to display a functional region selection page 401.

Sub-step A3. Receive the second sub-input by the user to the second display region in the second interface.

Sub-step A4. Cancel, in response to the second sub-input, display of the first control in the first interface and establish an association between the first control and the first display region in the first interface.

The second display region is a region corresponding to the first display region.

In this step, the second sub-input is used for select the second display region in the second interface.

For example, in the second interface, at least one display region is displayed, and the user selects one as the second display region.

Optionally, in the second interface, to facilitate selection of the second display region by the user, the second interface displays the outline of the second display region; while in the first interface, the corresponding first display region exists, but the outline of the first display region is not displayed in the first interface to avoid blocking the content in the first interface.

Optionally, based on the second display region selected by the user in the second interface, an input entry for determining the second display region is provided to facilitate input by the user through the input entry, so that the second interface is switched back to the first interface.

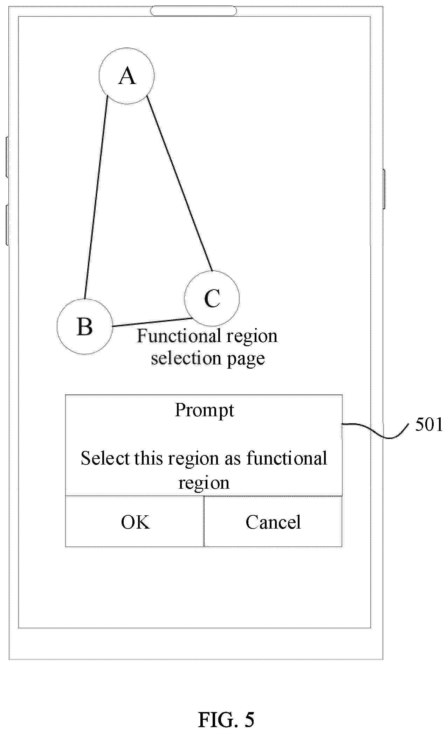

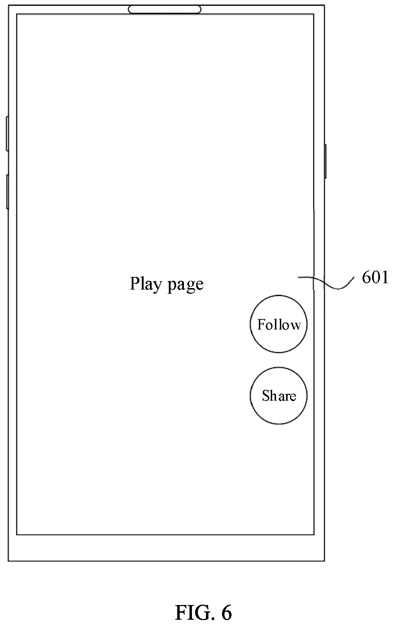

For example, referring to FIG. 5, after the user selects the second display region, a prompt window 501 is displayed, with "Select this region as functional region" prompted and options "OK" and "Cancel" provided in the prompt window 501. After the user clicks the option "OK", the interface is switched back to the first interface, and the first control in the first interface is hidden. Referring to FIG. 6, the first control is no longer displayed in a play page 601.

Optionally, the second sub-input includes an input for determining the second display region.

In addition, in more solutions, the user may also cancel the second display region selected in the second interface. Correspondingly, after the second interface is switched back to the first interface, the first control in the first interface is normally displayed.

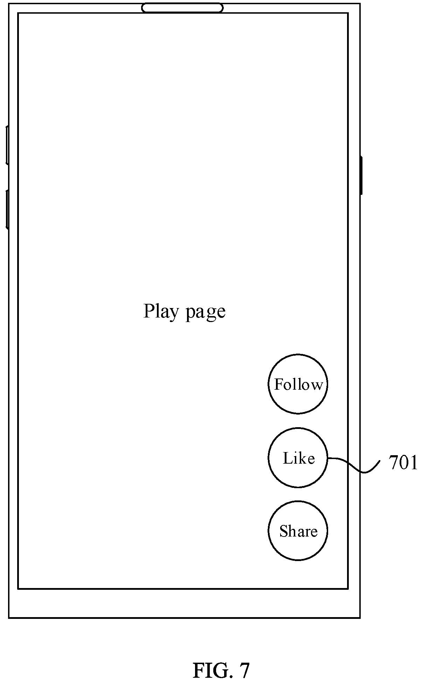

For example, after the user clicks the option "Cancel", referring to FIG. 7, the first control 701 in the play page is normally displayed.

Optionally, when the first control is hidden, other controls in the first interface can be repositioned to fill the space, ensuring that all controls in the first interface are displayed in an orderly manner.

In this embodiment, a method is provided for determining the corresponding first display region in the corresponding first interface by selecting the second display region in the second interface by the user. In this way, the user can select a display region corresponding to the first control based on a new interface, avoiding direct selection in the first interface, as the display content in the first interface causes interference to selection by the user, thus further simplifying user operations.

In the procedure of the display control method according to another embodiment of this application, before step A3, the method further includes the following steps.

Step B1. Receive a third input by the user to the second interface.

The third input includes touch input by the user on a screen, not limited to input such as clicking, sliding, and dragging. The third input may also be non-touch input by the user, such as gesture actions and facial actions. The third input also includes input by the user on physical keys on the device, not limited to input such as pressing. In addition, the third input includes one or more inputs, where multiple inputs may be continuous or have time intervals.

In this step, the third input is used for the user to manually set the second display region in the second interface, so that the system can recognize the second display region and display the second display region in the second interface for selection by the user.

Step B2. Determine the second display region in response to the third input.

Optionally, a first scenario is as follows: The user marks a closed shape in the second interface and has the shape recognized and determined to be displayed as the second display region.

Optionally, a second scenario is as follows: The user sequentially presses multiple position points in the second interface, has each position point recognized, then sequentially connects adjacent two position points, connects the first position point and the last position point, determines the second display region based on these position points and connecting lines, and then has the second display region displayed.

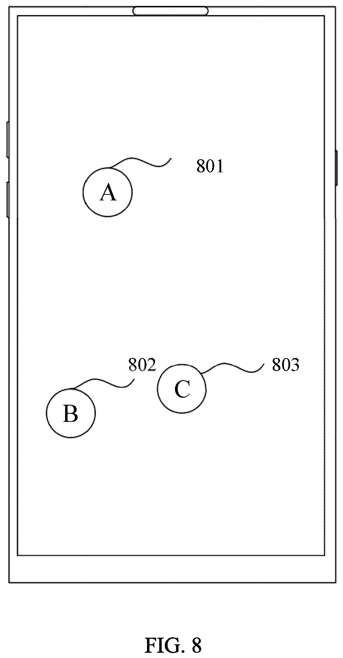

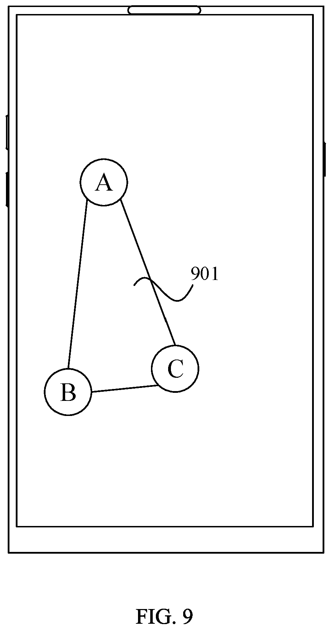

For example, referring to FIG. 8, the user presses a position point with a single finger and releases this position point. At this time, position point A 801 is marked. Then, the user presses another position point with a single finger and releases this position point. At this time, position point B 802 is marked. Correspondingly, a connecting line is drawn between position point A 801 and position point B 802. Further, the user presses another position point with a single finger and releases this position point. At this time, position point C 803 is marked. Correspondingly, a connecting line is drawn between position point B 802 and position point C 803. Finally, a connecting line is drawn between position point A 801 and position point C 803. Referring to FIG. 9, the three position points form a triangular second display region 901 through three connecting lines.

Optionally, a third scenario is as follows: The user simultaneously presses multiple position points in the second interface, has each position point recognized, finds an associated point of each position point, connects each position point and the associated point thereof, determines the second display region based on these position points and connecting lines, and then has the second display region displayed.

For example, the user simultaneously presses multiple position points with multiple fingers. At this time, the position point pressed by each finger is marked. One finger is used for selecting one position point. Further, a reference position is determined in the second interface, a distance between each position point and the reference position is obtained, and all position points are sorted according to a preset distance change rule. For a specific position point, an adjacent position point arranged thereafter may be used as an associated point of the position point, and a connecting line is drawn between the position point and the associated point; and for the last position point, the first position point may be used as an associated point thereof.

In the above example, the reference position may be a straight line for obtaining the distance between each position point and the straight line. The preset distance change rule may be from the near to the distant.

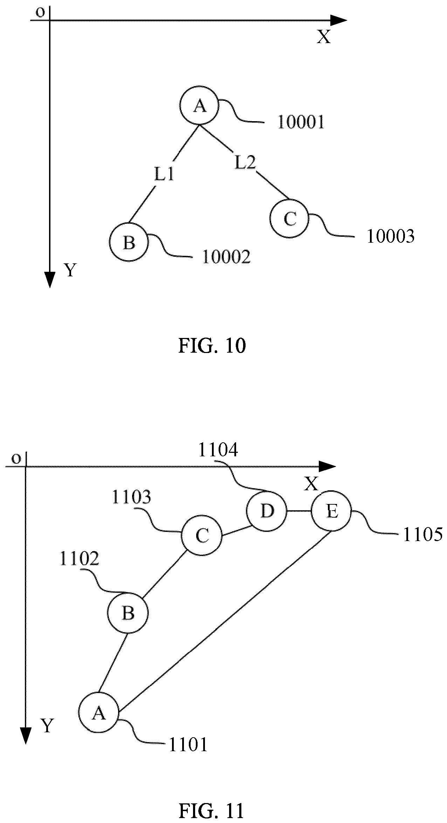

Referentially, a coordinate system is established in the second interface, where the coordinate system includes axes X and Y, with positive coordinates of all position points being positive, so as to obtain the horizontal coordinate of each position point. Referring to FIG. 10, the determined position points include position point A 10001, position point B 10002, and position point C 10003, and the established coordinate system is as shown in the figure. Further, the horizontal coordinate of each position point is obtained, and all position points are sequentially arranged in ascending order of the horizontal coordinates. This means that the order is: position point B 10002, position point A 10001, and position point C 10003. Connecting line segment L1 is drawn between position point B 10002 and position point A 10001, and connecting line segment L2 is drawn between position point A 10001 and position point C 10003. Further, a connecting line segment is drawn between position point B 10002 and position point C 10003. In this way, a second display region is determined.

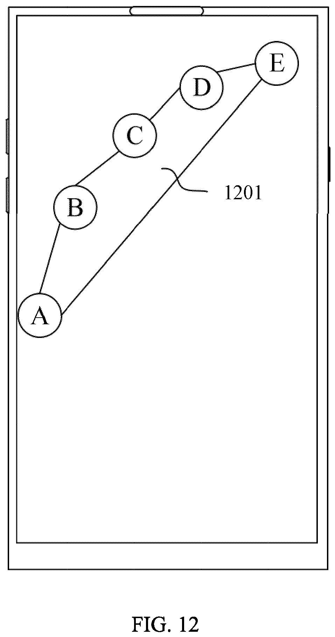

Referentially, as shown in FIG. 11, position point A 10001, position point B 10002, position point C 10003, position point D 10004, and position point E 10005 are determined, and the established coordinate system is as shown in the figure. Further, the horizontal coordinate of each position point is obtained, and all position points are sequentially arranged in ascending order of the horizontal coordinates. This means that the order is: position point A 10001, position point B 10002, position point C 10003, position point D 10004, and position point E 10005. Connecting lines are drawn between position point A 1101 and position point B 1102, between position point B 1102 and position point C 1103, between position point C 1103 and position point D 1104, and between position point D 1104 and position point E 1105. Further, a connecting line is drawn between position point A 1101 and position point E 1105. Referring to FIG. 12, a determined second display region 1201 is as shown in the figure.

In the coordinate systems in FIGs. 10 and 11, the origin O corresponds to the left vertex of the second interface, the axis X is parallel to the horizontal direction, and the axis Y is parallel to the vertical direction.

For the explanation of the associated point, refer to the following: For example, in a case that the first position point is determined, the second position point whose horizontal coordinate is greater than the horizontal coordinate of the first position point is looked for, and the horizontal coordinate of the second position point is the smallest among all position points whose horizontal coordinates are greater than that of the first position point. That is, the second position point is the position point closest to the first position point in the direction of axis X among all position points whose horizontal coordinates are greater than that of the first position point. In this way, it is considered that the associated point of the first position point is the second position point, and a connecting line segment is drawn between the two position points.

Connecting lines being drawn between two position points based on the coordinate of each position point in the coordinate system can ensure accurate connection through the lines, thereby ensuring high accuracy of the determined second display region.

Optionally, a fourth scenario is as follows: After simultaneously pressing multiple position points with multiple fingers of one hand, the user has all pressing fingers retract to one point and releases the position point after retraction. Correspondingly, the position points pressed by the fingers and the position point for retraction are marked, where the position point for retraction is used as a reference point. Further, a reference position is determined in the second interface, a distance between each position point and the reference position is obtained, and multiple position points are sorted according to a preset distance change rule. Connecting lines are sequentially drawn between adjacent two position points, a connecting line is drawn between the first position point and the reference point, and a connecting line is drawn between the last position point and the reference point. Based on these position points, the reference point, and the connecting lines, the second display region is determined and displayed.

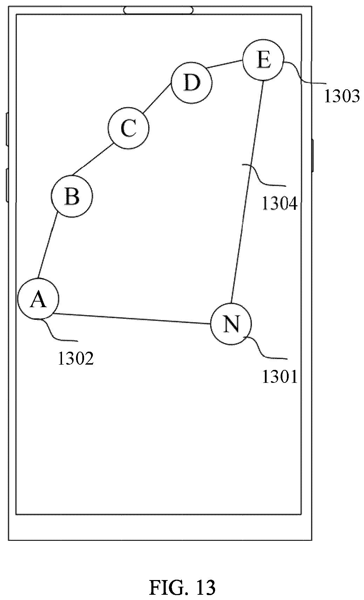

For example, referring to FIG. 13, based on the example shown in FIG. 11, the connecting line between the first position point and the last position point is canceled, connecting lines are drawn between reference point N 1301 and position point A 1302 and between position point E 1303 and reference point N 1301, and finally a second display region 1304 is determined.

In this scenario, the determined second display region has relatively large area, avoiding misoperations by the user and improving operation efficiency.

In this embodiment, multiple input methods for setting the second display region are provided, and multiple algorithms are provided, to determine the second display region. The input methods for setting the second display region are simple and highly interesting, and the algorithms for determining the second display region are also accurate, thereby simplifying user operations in terms of setting and subsequent operation methods.

In the procedure of the display control method according to another embodiment of this application, the second input includes a third sub-input and a fourth sub-input; and correspondingly, step 130 includes the following steps.

Sub-step C1. Display the first control in the first interface in response to the third sub-input by the user to the first display region.

In this embodiment, in the case of the association between the first display region and the first control, the first control is hidden in the first interface. When needing to provide input to the first control, the user can provide the third sub-input to the first display region to switch the first control to a display state.

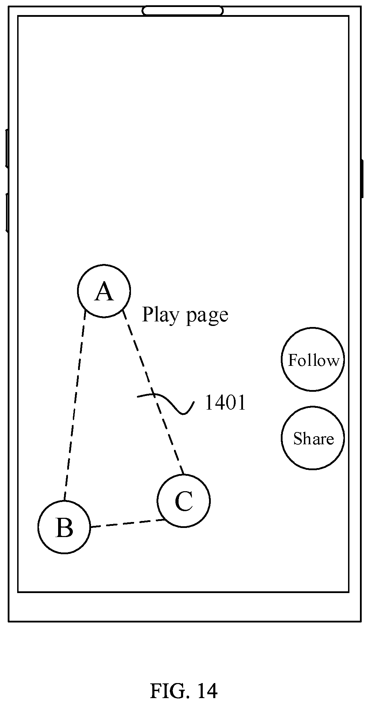

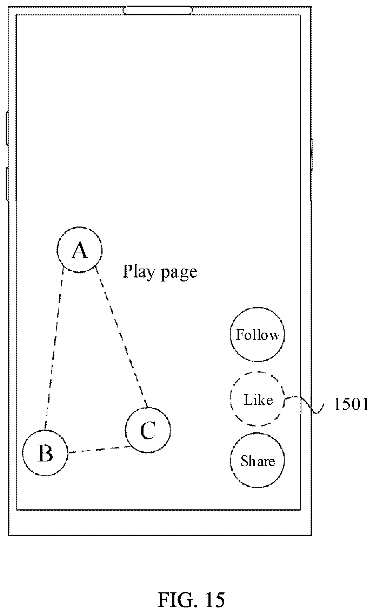

For example, referring to FIG. 14, after the user provides input to the first display region 1401, referring to FIG. 15, the first control 1501 is displayed at the original position, that is, the position before hiding.

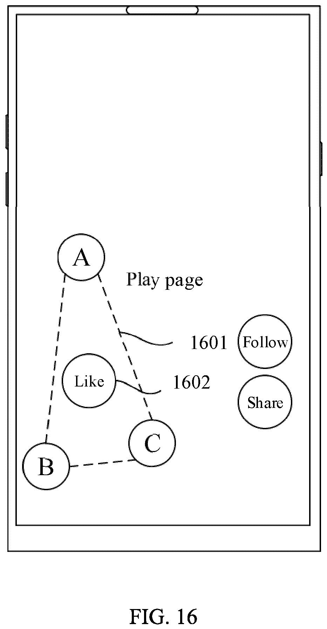

For another example, referring to FIG. 16, after the user provides input to the first display region 1601, the first control 1602 is displayed within the first display region 1601.

Sub-step C2. Perform the first operation corresponding to the first control in response to the fourth sub-input by the user to the first control.

For example, the user clicks the first control.

In addition, after the first operation corresponding to the first control is performed, the first control continues to be hidden in the first interface.

In this embodiment, the display state of the first control corresponding to the first display region can be activated through the third sub-input, making the hidden first control reappear, facilitating input by the user to the first control. It can be seen that based on this embodiment, the user can freely switch the first control between the display state and hidden state depending on a need, avoiding the influence of display of the control on the screen and facilitating habitual operations by the user.

In the procedure of the display control method according to another embodiment of this application, after step 120, the method further includes the following steps.

Step D1. Receive a fourth input by the user to the first display region.

The fourth input includes touch input by the user on a screen, not limited to input such as clicking, sliding, and dragging. The fourth input may also be non-touch input by the user, such as gesture actions and facial actions. The fourth input also includes input by the user on physical keys on the device, not limited to input such as pressing. In addition, the fourth input includes one or more inputs, where multiple inputs may be continuous or have time intervals.

In this step, the fourth input is used for canceling the association between the first control and the first display region.

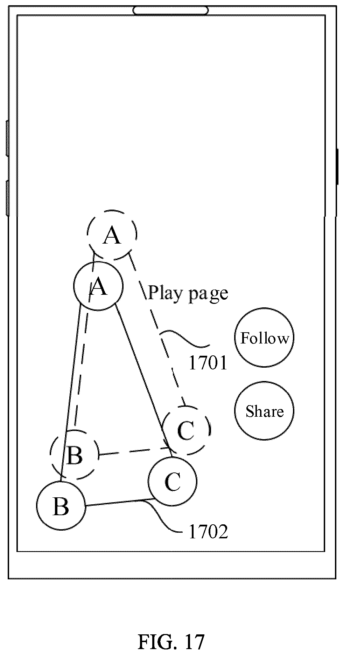

For example, the user long presses the first display region, the first display region is highlighted in the first interface. Referring to FIG. 17, the user moves the first display region from the first position 1701 to the second position 1702 and releases the first display region, with the position of the first display region changed, completing the fourth input.

Step D2. Display, in response to the fourth input, the first control at a target position in the first interface and cancel the association between the first control and the first display region.

In this step, the association between the first control and the first display region is canceled, meaning that the first display region in the first interface is no longer used to receive specified input, and display of the first control is restored in the first interface, facilitating user operations.

Optionally, in the case that the association between the first control and the first display region is canceled, prompt information is displayed in the interface to prompt the user.

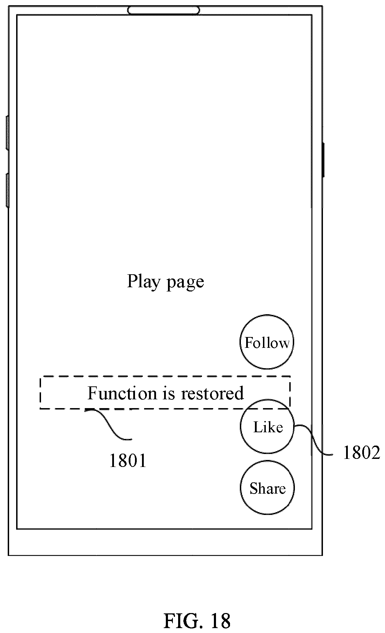

For example, referring to FIG. 18, the first interface displays prompt information 1801, and the first control 1802 is displayed at the initial position.

In this embodiment, a method for canceling the association between the first control and the first display region is provided, allowing the user to freely set and cancel functional regions in the interface to meet needs of the user.

In the procedure of the display control method according to another embodiment of this application, after step 120, the method further includes the following steps.

Step E1. Receive a fifth input by the user to the first display region.

The fifth input includes touch input by the user on a screen, not limited to input such as clicking, sliding, and dragging. The fifth input may also be non-touch input by the user, such as gesture actions and facial actions. The fifth input also includes input by the user on physical keys on the device, not limited to input such as pressing. In addition, the fifth input includes one or more inputs, where multiple inputs may be continuous or have time intervals.

Step E2. Update a display state of the first display region in response to the fifth input.

The display state includes at least one of the following: position information, size information, and color information.

In this step, the fifth input is used for updating the display state of the first display region.

For example, in the first interface, the user long presses the first display region, a modification bar for the display state pops up, and the user can modify the display state in the modification bar to achieve a desired effect for the user.

In this embodiment, a method for updating the display state of the first display region is provided. On the basis of the association between the first display region and the first control, the user can customize the display state of the first display region to meet the operational habits of the user, thereby facilitating user operations and simplifying user operations.

In the procedure of the display control method according to another embodiment of this application, in a case that the first interface further includes a third display region and the third display region has an association with a second control in the first interface, the method further includes the following steps.

Step F1. Receive a sixth input by the user to the first display region and the third display region.

The first display region and the third display region are both functional regions.

The sixth input includes touch input by the user on a screen, not limited to input such as clicking, sliding, and dragging. The sixth input may also be non-touch input by the user, such as gesture actions and facial actions. The sixth input also includes input by the user on physical keys on the device, not limited to input such as pressing. In addition, the sixth input includes one or more inputs, where multiple inputs may be continuous or have time intervals.

In this step, the sixth input is used for performing operations on the first display region and the third display region to implement combined execution of multiple operations corresponding to multiple controls.

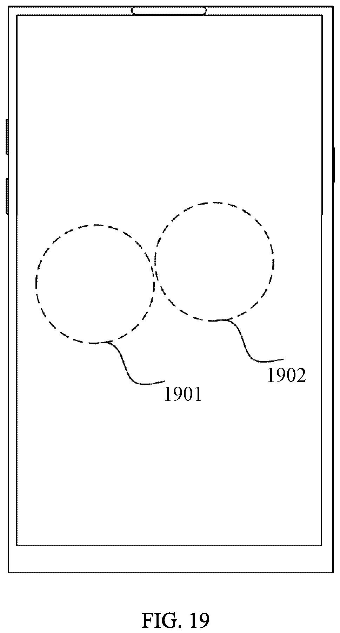

For example, referring to FIG. 19, the user first presses without releasing the first display region 1901, moves the finger to the third display region 1902, presses the third display region 1902, and then releases the third display region 1902.

This embodiment can be extended to that the sixth input is provided to more display regions, not limited to the first display region and the third display region.

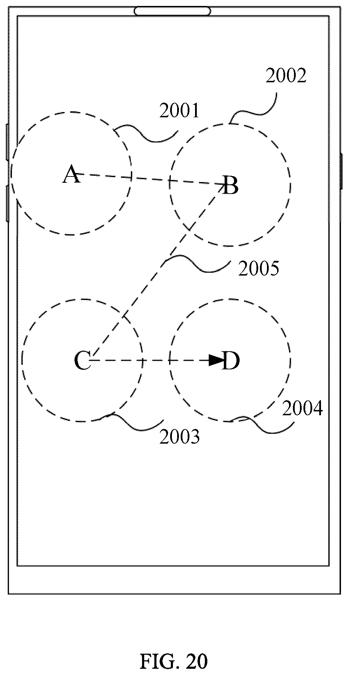

For example, referring to FIG. 20, the user first presses without releasing region A 2001, moves the finger to region B 2002, presses region B 2002, does not release, moves the finger to region C 2003, presses without releasing region C 2003, moves the finger to region D 2004, presses region D 2004, and then releases region D 2004, that is, moving according to the movement trace 2005 in the figure.

Step F2. Perform, in response to the sixth input and based on an input parameter of the sixth input, the first operation corresponding to the first control in a target sequence and perform a second operation corresponding to the second control.

The target sequence has an association with the input parameter of the sixth input.

Optionally, the input parameter of the sixth input includes an input order for the first display region and the third display region.

For example, referring to FIG. 19, the user first presses without releasing the first display region 1901, moves the finger to the third display region 1902, presses the third display region 1902, and then releases the third display region 1902. Correspondingly, the first operation corresponding to the first control is performed first, and then the second operation corresponding to the second control is performed.

Extensibly, for example, referring to the movement trace 2005 in FIG. 20, first, an operation corresponding to a control associated with region A 2001 is performed, second, fan operation corresponding to a control associated with region B 2002 is performed, then an operation corresponding to a control associated with region C 2003 is performed, and finally, an operation corresponding to a control associated with region D 2004 is performed.

An example of the application scenarios of this embodiment is as follows: In a short video play page, the user performs the sixth input to the "like" functional region and the "favorite" functional region, and in the play page, the "like" and "favorite" operations are executed in combination.

Optionally, the number of controls corresponding to the first display region is not limited. When multiple controls exist, all operations corresponding to the controls can be executed simultaneously.

Optionally, the number of controls corresponding to the third display region is not limited. When multiple controls exist, all operations corresponding to the controls can be executed simultaneously.

In this embodiment, a method for providing input to multiple display regions is provided, which can implement combined execution of multiple operations corresponding to controls associated with multiple display regions, avoiding the need for the user to provide input to one display region, wait for a corresponding operation to be executed, and then provide input to another display region, thereby simplifying user operations and increasing interest of user operations.

In summary, this application provides a display control method, which can provide a user with better interface viewing experience while providing the capability of controlling functional regions in an interface. The user can set functional regions on the interface to compensate for the removal of function icons. The improvements include the following: Function icons are hidden in the interface, corresponding functions are presented to the user in the form of functional regions, allowing the user to provide input in different functional regions to trigger corresponding functional responses; the user can customize the function of each functional region based on use habits of the user, avoiding accident touching caused by fixed functional regions; and the user can provide one input to multiple functional regions to sequentially implement the functions of the multiple functional regions, implementing combination of functions.

It can be seen that according to a first aspect, this application addresses the pain point of complex interface elements by implementing necessary element functions in corresponding regions, featuring optimization in user experience; according to a second aspect, this application can implement synchronous triggering of multiple functions based on multiple functional regions, featuring improvement in interactivity; according to a third aspect, in this application, a user can customize functional regions, improving user design experience and revolutionizing existing interface design; according to a fourth aspect, this application is applicable to various applications to achieve desired viewing experience of the user for different applications; and according to a fifth aspect, in this application, the user can flexibly control ranges of functional regions and functions corresponding to the functional regions based on behavioral habits of the user, and can also avoid accident touching caused by unified setting of functional regions.

The display control method provided in the embodiments of this application may be executed by a display control apparatus. In the embodiments of this application, the display control method being executed by the display control apparatus is used as an example to describe the display control apparatus according to the embodiments of this application.

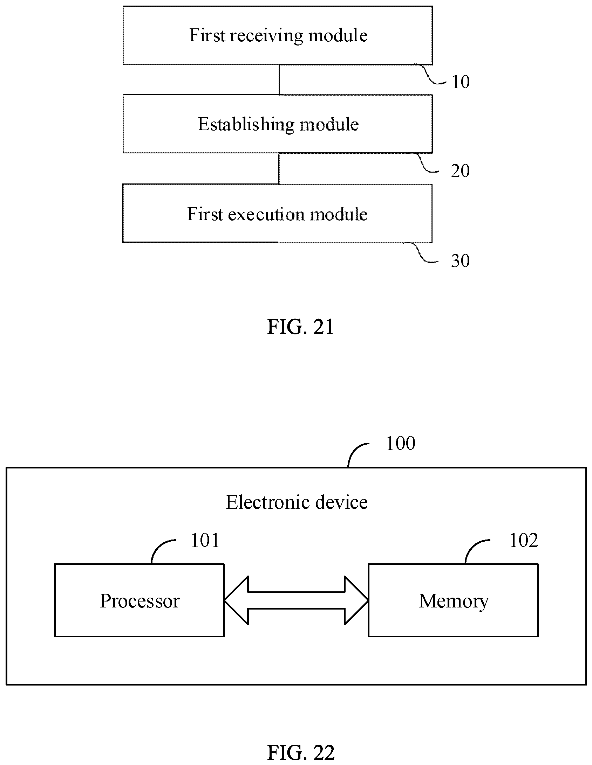

FIG. 21 is a block diagram of a display control apparatus according to another embodiment of this application. The apparatus includes:
a first receiving module 10 configured to: in a case that a first interface is displayed, receive a first input by a user, where the first interface includes a first control;
an establishing module 20 configured to cancel, in response to the first input, display of the first control and establish an association between the first control and a first display region in the first interface; and
a first execution module 30 configured to perform a first operation corresponding to the first control in response to a second input by the user to the first display region.

In this embodiment of this application, in the case that the first interface is displayed, the user can establish an association between the first display region in the first interface and the first control in the first interface by the first input, so as to cancel the display of the first control in the first interface on the basis of establishing the association between the first display region and the first control. Furthermore, the user can provide the second input to the first display region, so that the first operation corresponding to the first control can be executed in response to the second input. It can be seen that based on this embodiment of this application, for the controls in the interface, the user can hide some of the controls in a customized manner to experience a simplified display mode. When the user wants to use the functions corresponding to these hidden controls, they can directly perform quick operations in the corresponding display regions in the first interface to implement the functions corresponding to the controls, thereby simplifying user operations.

Optionally, the first input includes a first sub-input and a second sub-input;
the first receiving module 10 includes:
a first receiving unit configured to receive the first sub-input by the user to the first control; and
the establishing module 20 includes:
   a first display unit configured to display a second interface corresponding to the first interface in response to the first sub-input;
   a second receiving unit configured to receive the second sub-input by the user to a second display region in the second interface; and
   an establishing unit configured to cancel, in response to the second sub-input, display of the first control in the first interface and establish an association between the first control and the first display region in the first interface; where
   the second display region is a region corresponding to the first display region.

Optionally, the apparatus further includes:
a second receiving module configured to receive a third input by the user to the second interface; and
a determining module configured to determine the second display region in response to the third input.

Optionally, the second input includes a third sub-input and a fourth sub-input; and
the first execution module 30 includes:
a second display unit configured to display the first control in the first interface in response to the third sub-input by the user to the first display region; and
an execution unit configured to perform the first operation corresponding to the first control in response to the fourth sub-input by the user to the first control.

Optionally, the apparatus further includes:
a third receiving module configured to receive a fourth input by the user to the first display region; and
a canceling module configured to display, in response to the fourth input, the first control at a target position in the first interface and cancel the association between the first control and the first display region.

Optionally, the apparatus further includes:
a fourth receiving module configured to receive a fifth input by the user to the first display region; and
an updating module configured to update a display state of the first display region in response to the fifth input; where
the display state includes at least one of the following: position information, size information, and color information.

Optionally, in a case that the first interface further includes a third display region and the third display region has an association with a second control in the first interface,
the apparatus further includes:
a fifth receiving module configured to receive a sixth input by the user to the first display region and the third display region; and
a second execution module configured to perform, in response to the sixth input and based on an input parameter of the sixth input, the first operation corresponding to the first control in a target sequence and perform a second operation corresponding to the second control; where
the target sequence has an association with the input parameter of the sixth input.

The display control apparatus in the embodiments of this application may be an electronic device, or a component in an electronic device such as an integrated circuit or chip. The electronic device may be a terminal or other devices than terminals. For example, the electronic device may be a mobile phone, a tablet computer, a notebook computer, a palmtop computer, a vehicle-mounted electronic device, a mobile internet device (Mobile Internet Device, MID), an augmented reality (Augmented Reality, AR)/virtual reality (Virtual Reality, VR) device, a robot, a wearable device, an ultra-mobile personal computer (Ultra-Mobile Personal Computer, UMPC), a netbook, a personal digital assistant (Personal Digital Assistant, PDA), or the like; or may be a server, a network attached storage (Network Attached Storage, NAS), a personal computer (Personal Computer, PC), a television (Television, TV), a teller machine, a self-service machine, or the like. This is not specifically limited in the embodiments of this application.

The display control apparatus in the embodiments of this application may be an apparatus having an operating system. The operating system may be an Android (Android) operating system, iOS operating system, or another possible operating system. This is not specifically limited in the embodiments of this application.

The display control apparatus provided in the embodiments of this application can implement the processes implemented in the foregoing method embodiments, with the same functions implemented. To avoid repetition, details are not described herein again.

Optionally, as shown in FIG. 22, an embodiment of this application further provides an electronic device 100 including a processor 101, a memory 102, and a program or instruction stored in the memory 102 and capable of running on the processor 101, where when the program or instruction is executed by the processor 101, the steps of the foregoing embodiments of the display control method are implemented, with the same technical effects achieved. To avoid repetition, details are not described herein again.

It should be noted that the electronic device in this embodiment of this application includes the foregoing mobile electronic device and non-mobile electronic device.

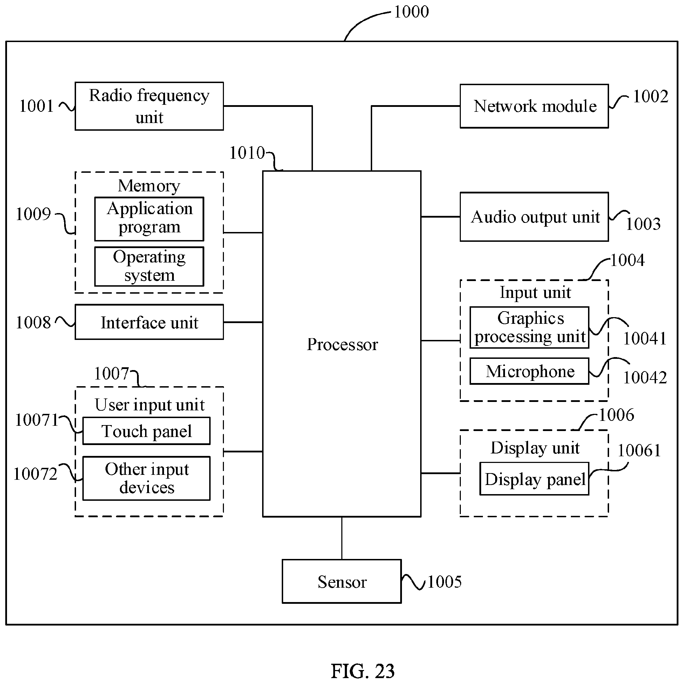

FIG. 23 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by those skilled in the art that the electronic device 1000 may further include a power supply (for example, battery) supplying power to the components. The power supply may be logically connected to the processor 1010 via a power management system, so that functions such as charge management, discharge management, and power consumption management are implemented via the power management system. The structure of the electronic device shown in FIG. 23 does not constitute any limitation on the electronic device, and the electronic device may include more or fewer components than shown in the figure, or combine some of the components, or have different arrangements of the components. Details are not described herein.

The user input unit 1007 is configured to: in a case that a first interface is displayed, receive a first input by a user, where the first interface includes a first control. The processor 1010 is configured to cancel, in response to the first input, display of the first control and establish an association between the first control and a first display region in the first interface; and performing a first operation corresponding to the first control in response to a second input by the user to the first display region.

In this embodiment of this application, in the case that the first interface is displayed, the user can establish an association between the first display region in the first interface and the first control in the first interface by the first input, so as to cancel the display of the first control in the first interface on the basis of establishing the association between the first display region and the first control. Furthermore, the user can provide the second input to the first display region, so that the first operation corresponding to the first control can be executed in response to the second input. It can be seen that based on this embodiment of this application, for the controls in the interface, the user can hide some of the controls in a customized manner to experience a simplified display mode. When the user wants to use the functions corresponding to these hidden controls, they can directly perform quick operations in the corresponding display regions in the first interface to implement the functions corresponding to the controls, thereby simplifying user operations.

Optionally, the first input includes a first sub-input and a second sub-input; the user input unit 1007 is further configured to receive the first sub-input by the user to the first control; the display unit 1006 is configured to display a second interface corresponding to the first interface in response to the first sub-input; the user input unit 1007 is further configured to receive the second sub-input by the user to a second display region in the second interface; and the processor 1010 is further configured to cancel, in response to the second sub-input, display of the first control in the first interface and establish an association between the first control and the first display region in the first interface; where the second display region is a region corresponding to the first display region.

Optionally, the user input unit 1007 is further configured to receive a third input by the user to the second interface; and the processor 1010 is further configured to determine the second display region in response to the third input.

Optionally, the second input includes a third sub-input and a fourth sub-input; the display unit 1006 is further configured to display the first control in the first interface in response to the third sub-input by the user to the first display region; and the processor 1010 is further configured to perform the first operation corresponding to the first control in response to the fourth sub-input by the user to the first control.

Optionally, the user input unit 1007 is further configured to receive a fourth input by the user to the first display region; the display unit 1006 is further configured to display the first control at a target position in the first interface in response to the fourth input; and the processor 1010 is further configured to cancel the association between the first control and the first display region.

Optionally, the user input unit 1007 is further configured to receive a fifth input by the user to the first display region; and the processor 1010 is further configured to update a display state of the first display region in response to the fifth input; where the display state includes at least one of the following: position information, size information, and color information.

Optionally, the user input unit 1007 is further configured to receive a sixth input by the user to the first display region and the third display region; and the processor 1010 is further configured to perform, in response to the sixth input and based on an input parameter of the sixth input, the first operation corresponding to the first control in a target sequence and perform a second operation corresponding to the second control; where the target sequence has an association with the input parameter of the sixth input.

In summary, this application provides a display control method, which can provide a user with better interface viewing experience while providing the capability of controlling functional regions in an interface. The user can set functional regions on the interface to compensate for the removal of function icons. The improvements include the following: Function icons are hidden in the interface, corresponding functions are presented to the user in the form of functional regions, allowing the user to provide input in different functional regions to trigger corresponding functional responses; the user can customize the function of each functional region based on use habits of the user, avoiding accident touching caused by fixed functional regions; and the user can provide one input to multiple functional regions to sequentially implement the functions of the multiple functional regions, implementing combination of functions.

It can be understood that in this embodiment of this application, the input unit 1004 may include a graphics processing unit (Graphics Processing Unit, GPU) 10041 and a microphone 10042. The graphics processing unit 10041 processes image data of a still picture or video image that is obtained by an image capture apparatus (for example, camera) in an image or video image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, volume control button or a power on/off button), a trackball, a mouse, and a joystick. Details are not described herein. The memory 1009 may be configured to store a software program and various data which include but are not limited to an application program and an operating system. The processor 1010 may integrate an application processor and a modem processor. The application processor mainly processes an operating system, a user interface, an application program, and the like. The modem processor mainly processes wireless communication. It can be understood that the modem processor may alternatively be not integrated in the processor 1010.

The memory 1009 may be configured to store a software program and various data. The memory 1009 may include a first storage zone for storing programs or instructions and a second storage zone for storing data. The first storage zone may store an operating system, an application program or instruction required by at least one function (for example, a sound playback function or an image playback function), and the like. In addition, the memory 1009 may be a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct ram bus random access memory (Direct Rambus RAM, DRRAM). The memory 1009 of the embodiments of this application includes but is not be limited to these and any other applicable types of memories.

The processor 1010 may include one or more processing units. Optionally, the processor 1010 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1010.

An embodiment of this application further provides a readable storage medium, where the readable storage medium stores a program or instruction, and when the program or instruction is executed by a processor, the processes of the foregoing display control method embodiments are implemented, with the same technical effects achieved. To avoid repetition, details are not described herein again.

The processor is the processor in the electronic device described in the foregoing embodiments. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instruction to implement the processes of the foregoing display control method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a storage medium, and the computer program product is executed by at least one processor to implement the processes of the foregoing display control method embodiments, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A display control method, wherein the method comprises:
in a case that a first interface is displayed, receiving a first input by a user, wherein the first interface comprises a first control;
canceling, in response to the first input, display of the first control and establishing an association between the first control and a first display region in the first interface; and
performing a first operation corresponding to the first control in response to a second input by the user to the first display region.

2. The method according to claim 1, wherein the first input comprises a first sub-input and a second sub-input;
the receiving a first input by a user comprises:
receiving the first sub-input by the user to the first control; and
the canceling, in response to the first input, display of the first control and establishing an association between the first control and a first display region in the first interface comprises:
displaying a second interface corresponding to the first interface in response to the first sub-input;
receiving the second sub-input by the user to a second display region in the second interface; and
canceling, in response to the second sub-input, display of the first control in the first interface and establishing an association between the first control and the first display region in the first interface; wherein
the second display region is a region corresponding to the first display region.

3. The method according to claim 2, wherein before the receiving the second sub-input by the user to a second display region in the second interface, the method further comprises:
receiving a third input by the user to the second interface; and
determining the second display region in response to the third input.

4. The method according to claim 1, wherein the second input comprises a third sub-input and a fourth sub-input; and
the performing a first operation corresponding to the first control in response to a second input by the user to the first display region comprises:
displaying the first control in the first interface in response to the third sub-input by the user to the first display region; and
performing the first operation corresponding to the first control in response to the fourth sub-input by the user to the first control.

5. The method according to claim 1, wherein after the establishing an association between the first control and a first display region in the first interface, the method further comprises:
receiving a fourth input by the user to the first display region; and
displaying the first control at a target position in the first interface and canceling the association between the first control and the first display region in response to the fourth input.

6. The method according to claim 1, wherein after the establishing an association between the first control and a first display region in the first interface, the method further comprises:
receiving a fifth input by the user to the first display region; and
updating a display state of the first display region in response to the fifth input; wherein
the display state comprises at least one of the following: position information, size information, and color information.

7. The method according to claim 1, wherein in a case that the first interface further comprises a third display region and the third display region has an association with a second control in the first interface,
the method further comprises:
receiving a sixth input by the user to the first display region and the third display region; and
performing, in response to the sixth input and based on an input parameter of the sixth input, the first operation corresponding to the first control in a target sequence and performing a second operation corresponding to the second control; wherein
the target sequence has an association with the input parameter of the sixth input.

8. A display control apparatus, wherein the apparatus comprises:
a first receiving module configured to: in a case that a first interface is displayed, receive a first input by a user, wherein the first interface comprises a first control;
an establishing module configured to cancel, in response to the first input, display of the first control and establish an association between the first control and a first display region in the first interface; and
a first execution module configured to perform a first operation corresponding to the first control in response to a second input by the user to the first display region.

9. The apparatus according to claim 8, wherein the first input comprises a first sub-input and a second sub-input;
the first receiving module comprises:
a first receiving unit configured to receive the first sub-input by the user to the first control; and
the establishing module comprises:
a first display unit configured to display a second interface corresponding to the first interface in response to the first sub-input;
a second receiving unit configured to receive the second sub-input by the user to a second display region in the second interface; and
an establishing unit configured to cancel, in response to the second sub-input, display of the first control in the first interface and establish an association between the first control and the first display region in the first interface; wherein
the second display region is a region corresponding to the first display region.

10. The apparatus according to claim 9, wherein the apparatus further comprises:
a second receiving module configured to receive a third input by the user to the second interface; and
a determining module configured to determine the second display region in response to the third input.

11. The apparatus according to claim 8, wherein the second input comprises a third sub-input and a fourth sub-input; and
the first execution module comprises:
a second display unit configured to display the first control in the first interface in response to the third sub-input by the user to the first display region; and
an execution unit configured to perform the first operation corresponding to the first control in response to the fourth sub-input by the user to the first control.

12. The apparatus according to claim 8, wherein the apparatus further comprises:
a third receiving module configured to receive a fourth input by the user to the first display region; and
a canceling module configured to display, in response to the fourth input, the first control at a target position in the first interface and cancel the association between the first control and the first display region.

13. The apparatus according to claim 8, wherein the apparatus further comprises:
a fourth receiving module configured to receive a fifth input by the user to the first display region; and
an updating module configured to update a display state of the first display region in response to the fifth input; wherein
the display state comprises at least one of the following: position information, size information, and color information.

14. The apparatus according to claim 8, wherein in a case that the first interface further comprises a third display region and the third display region has an association with a second control in the first interface,
the apparatus further comprises:
a fifth receiving module configured to receive a sixth input by the user to the first display region and the third display region; and
a second execution module configured to perform, in response to the sixth input and based on an input parameter of the sixth input, the first operation corresponding to the first control in a target sequence and perform a second operation corresponding to the second control; wherein
the target sequence has an association with the input parameter of the sixth input.

15. An electronic device, comprising a processor and a memory, wherein the memory stores a program or instruction capable of running on the processor, and when the program or instruction is executed by the processor, the steps of the display control method according to any one of claims 1 to 7 are implemented.

16. A readable storage medium, wherein the readable storage medium stores a program or instruction, and when the program or instruction is executed by a processor, the steps of the display control method according to any one of claims 1 to 7 are implemented.

17. A chip, wherein the chip comprises a processor and a communication interface, the communication interface is coupled to the processor, and the processor is configured to run a program or instruction to implement the display control method according to any one of claims 1 to 7.

18. A computer program product, wherein the program product is stored in a nontransient storage medium, and the program product is executed by at least one processor to implement the steps of the display control method according to any one of claims 1 to 7.

19. An electronic device, wherein the electronic device is configured to execute the steps of the display control method according to any one of claims 1 to 7.
